(19) Europäisches Patentamt / European Patent Office / Office européen des brevets

(11) **EP 4 358 530 B1**

(12) **EUROPÄISCHE PATENTSCHRIFT**

(45) Veröffentlichungstag und Bekanntmachung des Hinweises auf die Patenterteilung:
**11.09.2024   Patentblatt 2024/37**

(21) Anmeldenummer: **22203115.5**

(22) Anmeldetag: **21.10.2022**

(51) Internationale Patentklassifikation (IPC):
**H04N 23/68** (2023.01)   **G06K 7/10** (2006.01)
**G01T 5/00** (2006.01)   **H04N 5/14** (2006.01)
**H04N 25/773** (2023.01)

(52) Gemeinsame Patentklassifikation (CPC):
**H04N 23/6845; G06K 7/10722; H04N 25/773;**
G06K 2007/10514; H04N 5/144; H04N 23/81

(54) **ERFASSUNG VON OBJEKTEN EINES SICH BEWEGENDEN OBJEKTSTROMS**

DETECTING OBJECTS OF A MOVING OBJECT STREAM

DÉTECTION D'OBJETS D'UN FLUX D'OBJETS EN MOUVEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**24.04.2024   Patentblatt 2024/17**

(73) Patentinhaber: **SICK AG**
**79183 Waldkirch (DE)**

(72) Erfinder:
• **Müller, Dr. Romain**
**79252 Stegen (DE)**
• **Strohmeier, Dr. Dirk**
**79312 Emmendingen (DE)**

(56) Entgegenhaltungen:
**US-A1- 2006 249 581     US-A1- 2021 125 362**

• **GYONGY ISTVAN ET AL: "Edinburgh Research Explorer Object Tracking and Reconstruction with a Quanta Image Sensor Object Tracking and Reconstruction with a Quanta Image Sensor", INTERNATIONAL IMAGE SENSOR WORKSHOP 2017, 2 June 2017 (2017-06-02), .Hiroshima, Japan, pages 1 - 5, XP093027844, Retrieved from the Internet <URL:https://www.pure.ed.ac.uk/ws/portalfiles/ portal/37636343/Gyongy_final.pdf> [retrieved on 20230301]**
• **IWABUCHI KIYOTAKA ET AL: "Iterative Image Reconstruction for Quanta Image Sensor by using Variance-based Motion Estimation", PROC. INT. IMAGE SENSOR WORKSHOP (IISW), 31 December 2019 (2019-12-31), pages 1 - 4, XP093027833, Retrieved from the Internet <URL:https://www.imagesensors.org/Past%20W orkshops/2019%20Workshop/2019%20Papers/R 21.pdf> [retrieved on 20230301]**

**Beschreibung**

Die Erfindung betrifft eine Kameravorrichtung und ein Verfahren zu Erfassung von Objekten eines sich in einer Bewegungsrichtung bewegenden Objektstroms nach dem Oberbegriff von Anspruch 1 beziehungsweise 12.

Die optische Erfassung eines Objektstroms ist ein wichtiger Anwendungsfall für Automatisierungsaufgaben in der Industrie oder Logistik. Häufig werden die Objekte auf einer Förderbandanlage zwischen verschiedenen Prozessschritten gefördert. Ein konkretes Anwendungsbeispiel unter vielen ist die Sortierung von Paketen oder sonstigen Objekten. Die Identifizierung erfolgt dabei in der Regel durch Lesen eines optischen Codes. In anderen Anwendungen beispielsweise der Qualitätssicherung werden keine Codes gelesen, sondern andere Bildmerkmale ausgewertet. Im Stand der Technik ist bekannt, der Kamera einen zusätzlichen Sensor zuzuordnen, wie einen Laserscanner, der vorab eine ergänzende Geometrievermessung übernimmt.

Für die Bilderfassung wird meist ein CMOS-Bildsensor eingesetzt. Dieser nimmt mit einer bestimmten Aufnahmefrequenz Bilder auf und integriert dafür innerhalb einer Belichtungszeit alle Ladungen auf, die durch einfallende Photonen erzeugt werden. Um ein günstiges Signal-Rausch-Verhältnis zu erreichen, sollte eine ausreichend lange Belichtungszeit gewählt werden, in der genügend Ladungen akkumuliert werden. In einer dynamischen Szene kann dies allerdings zu einer Verwaschung des Bildes führen (motion blur, Bewegungsunschärfe). Dies beeinträchtigt die Qualität der weiteren Bildverarbeitung. Speziell beim Codelesen verschlechtert sich die Leserate. Eine kürzere Belichtungszeit würde die Bewegungsunschärfe reduzieren, aber nur um den genannten Preis eines verschlechterten Signal-Rausch-Verhältnisses. Durch das Zusammengruppieren von Pixeln (Binning) könnte das Signal-Rausch-Verhältnis ebenfalls verbessert werden, aber dadurch geht Auflösung verloren.

Es gibt im Stand der Technik Ansätze, die Bewegungsunschärfe zu kompensieren. Beispielsweise wird in der US 8 749 649 B1 eine Fotokamera mit einer Bildstabilisierung vorgestellt, die mehrere Frames aufnimmt und mit einer Rauschunterdrückungstechnik kombiniert. Das ist jedoch zum einen keine geeignete Kamera für die einleitend genannten Anwendungen. Zudem ändert es nichts an dem grundlegenden technischen Problem, dass die Belichtungszeit nur entweder für ein gutes Signal-Rausch-Verhältnis oder geringe Bewegungsunschärfe sorgen kann. Die EP 2 284 764 B1 befasst sich mit einem Aufnahmesystem zur Erfassung scharfer Strichcodebilder trotz Bewegung. Es berechnet eine Mehrfachbelichtungssequenz und erfasst damit ein Bild eines 2D-Strichcodes, schätzt die Unschärfe und verstärkt den Kontrast auf Basis der geschätzten Unschärfe. Auch hier wird das grundliegende Problem der Bilderfassung nicht angegangen.

In jüngerer Zeit wurden Kameras entwickelt, die in der Lage sind, einzelne Photonen nachzuweisen. Als ein Ansatz beispielsweise der Firmen Canon oder ST sind hier die sogenannten SPAD-Bildsensoren zu nennen (Single-Photon Avalanche Diode). Typischerweise werden sie mit gepulsten Halbleiterlichtquellen betrieben, um mit einem Lichtlaufzeitverfahren Tiefeninformationen zu gewinnen (TOF, Time of Flight). SPAD-Bildsensoren lassen sich jedoch auch verwenden, um anhand der jeweils erfassten Intensität 2D-Bilder in dunklen Umgebungen aufzunehmen. Die US 9 831 283 B2 beschreibt einen SPAD-Bildsensor in der Fluoreszenzlebensdauermikroskopie.

Bei QIS (Quanta Image Sensor) beispielsweise der Firma Gigajot wird die Photodiode auf besonders geringes Rauschen optimiert. Es werden innerhalb sehr kurzer Zeit viele Einzelbilder aufgenommen und die Einzelbilder zu einem Gesamtbild verarbeitet. Ein beispielhafter Übersichtsartikel dieser Technologie ist Ma, Jiaju et al., "Review of Quanta Image Sensors for Ultralow-Light Imaging", IEEE Transactions on Electron Devices 69.6 (2022): 2824-2839.

Die Firma Hamamatsu hat mit ihrem qCMOS®-Bildsensor (quantitative CMOS) Optimierungen gefunden, die den Nachweis einzelner Photonen ermöglicht. Allerdings wird diese Kamera in erster Linie in statischen Applikationen mit wenig Licht bei langer Belichtungszeit verwendet, und sie kann nicht schnell Bilder liefern. Die qCMOS® Technologie wird auf der Webseite der Firma Hamamatsu in einem Whitepaper "qCMOS®: Quantitative CMOS technology enabled by Photon Number Resolving" vorgestellt.

Die Arbeit von Gyongy, Istvan, et al., "Object tracking and reconstruction with a quanta image sensor", Proc. IISW (2017): 242-245 beschreibt, wie bei der Bildaufnahme mit einem QIS-Sensor Bewegungsunschärfen bei der Aggregation von Einzelaufnehmen durch Objektverfolgung reduziert werden können. Konkret wird ein bestimmter Algorithmus für die Objektverfolgung über Einzelaufnahmen beschrieben, mit dem eine Transformation zum Übereinanderlegen von Einzelbildern gewonnen wird.

Aus der Arbeit von Iwabuchi, Kiyotaka, Tomohiro Yamazaki, and Takayuki Hamamoto, "Iterative image reconstruction for quanta image sensor by using variance-based motion estimation," reconstruction 5 (2019): 6 ist ebenfalls bekannt, die Einzelaufnahmen eines QIS-Sensors unter Berücksichtigung der zwischenzeitlichen Objektbewegung zu kombinieren, wobei hier ein iterativer Ansatz gewählt wurde.

Die US 2021/125362 A1 beschreibt eine ereignisbasierte Kamera, die einen Objektstrom auf einem Förderband beobachtet und deren Höhe misst. Eine in das Sichtfeld der Kamera einfahrende Objektkante löst nacheinander Ereignisse auf einer Pixelreihe parallel zur Förderrichtung aus. Die Funktion der Auslösezeitpunkte über der Pixelposition innerhalb der Pixelreihe ergibt daher eine Gerade, aus deren Steigung die Objekthöhe berechnet werden kann.

In der US 2006/249581 A1 wird eine Bildaufnahme bewegter optischer Codes beschrieben.

Bisher gibt es aber keine Ansätze, in den eingangs genannten Anwendungen dafür zu sorgen, dass eine Einzelphotonen-Kamera darin praktisch nutzbar wird und die geschilderten Probleme der herkömmlichen Bildsensoren löst.

Es ist daher Aufgabe der Erfindung, die Erfassung von Bildern bewegter Objekte zu verbessern.

Diese Aufgabe wird durch eine Kameravorrichtung und ein Verfahren zu Erfassung von Objekten nach Anspruch 1 beziehungsweise 12 gelöst. Die Kameravorrichtung weist einen Bildsensor mit einer Vielzahl von Pixelelementen beispielsweise in einer Zeilen- oder Matrixanordnung auf. Damit werden Bilddaten eines Objektstroms aus Objekten aufgenommen, die sich relativ zu der Kamera bewegen. Eine Steuer- und Auswertungseinheit liest die Bilddaten aus und verarbeitet sie weiter. Der Bildsensor ist ein Hochfrequenz-Binärbildsensor und damit in der Lage, mit sehr schneller Bildwiederholfrequenz und sehr kurzen Belichtungszeiten Bilder aufzunehmen. Typische Zeitskalen liegen unter einer Millisekunde, im Bereich von einigen hundert, zehn oder einigen Mikrosekunden oder sogar im Mikrosekundenbereich. Diese Bilder weisen allerdings nur eine sehr geringe Bittiefe auf oder sind sogar nur reine Schwarzweißbilder mit lediglich zwei möglichen Zuständen der Pixelelemente. Einleitend sind verschiedene Technologien für Bildsensoren genannt, die die Eigenschaften eines Hochfrequenz-Binärbildsensors aufweisen.

Die Erfindung geht von dem Grundgedanken aus, eine Vielzahl wiederholter Aufnahmen von Einzelbildern auszulösen. Wegen der extremen Schnelligkeit von Hochfrequenz-Binärbildsensoren kann eine sehr große Anzahl von hunderten oder tausenden Bildern je Sekunde aufgenommen werden. Es werden somit als Bilddaten zunächst zahlreiche Einzelbilder erfasst. Die Einzelbilder mit ihrer geringen Bittiefe sind stark verrauscht, weil auch jedes einzelne Störphoton oder Dunkelereignis zu einer Detektion im betroffenen Pixelelement führen kann. Deshalb werden viele Einzelbilder zu einem gemeinsamen Bild kombiniert. Wegen der Bewegung des Objektstroms würde das naiv zu einem stark verwaschenen Bild führen. Deshalb erfolgt die Kombination der Einzelbilder zu dem gemeinsamen Bild unter Kompensation der zwischenzeitlichen Bewegung des Objektstroms zwischen den jeweiligen Aufnahmen.

Die Erfindung hat den Vorteil, dass durch die zahlreichen Einzelbilder effektiv eine lange Integrationszeit erreicht wird, denn es können Einzelbilder gesammelt werden, solange sich das Objekt im Sichtbereich befindet. Wegen der extrem kurzen Belichtungszeit für ein Einzelbild sind dies bei praktisch relevanten Bewegungsgeschwindigkeiten des Objektsstroms sehr viele Einzelbilder. Daraus ergibt sich insgesamt ein besonders günstiges Signal-Rausch-Verhältnis des gemeinsamen Bildes. Dafür muss kein Kompromiss hinsichtlich der Bildschärfe eingegangen werden, da die Bewegungsunschärfe bei der Kombination zu dem gemeinsamen Bild unterdrückt wird. Schließlich sind ungünstige Reflexionsbedingungen allenfalls für einen Teil der Einzelbilder zu erwarten, da sich die relative Position des aufgenommenen Objekts mit den Einzelbildern bei fortschreitender Bewegung des Objektstroms immer wieder ändert. Es treten daher erfindungsgemäß auch weniger Reflexionsprobleme auf.

Der Bildsensor ist vorzugsweise als SPAD-Bildsensor (Single-Photon Avalanche Diode) oder QIS-Bildsensor (Quanta Image Sensor) ausgebildet. Das sind Beispiele für Hochfrequenz-Binärbildsensoren, die im Markt verfügbar sind und auf die somit unmittelbar zurückgegriffen werden kann. Für weitere technische Merkmale wird auf die hierzu jeweils eingangs zitierte Literatur verwiesen. Speziell ein SPAD-Bildsensor kann mit Belichtungszeiten arbeiten, die bis zu wenigen Nanosekunden hinuntergehen, liefert aber andererseits in seinen jeweiligen Pixelelementen auch nur die rein binäre Information, ob ein Photon detektiert wurde oder nicht.

Die Einzelbilder sind vorzugsweise Binärbilder oder Quasi-Binärbilder mit höchstens zehn Zählerzuständen der Pixelelemente. Ein Binärbild ist beispielsweise als Schwarz-Weiß-Bild repräsentiert und enthält in seinen Pixeln die binäre Information, ob ein Photon detektiert wurde oder nicht. Als Alternative ist ein Multibit-Zähler je Pixel vorstellbar, der effektiv ein Einzelbild aufnimmt, das in sehr wenigen Graustufen aufgelöst ist und somit als quasi-binär verstanden werden kann. Dabei werden lediglich 0..x Zustände mit kleinem x unterschieden, beispielsweise x=2, 3, 4, 8, 10, 16, 20, 32, 50 oder 64. Der Fall x=1 entspricht in dieser Verallgemeinerung dem Binärbild mit einem Einbit-"Zähler", der nur 0 und 1 unterscheiden kann.

Die Bewegung des Objektstroms ist vorzugsweise gleichförmig. Das ist ein praktisch sehr relevanter Fall, der durch feste Geschwindigkeit v=const. ein sehr vereinfachtes Kompensationsproblem stellt, das zudem durch eine feste Richtung der Bewegung nur eindimensional ist.

Besonders bevorzugt ist die Kameravorrichtung stationär an einer Fördereinrichtung montiert, auf der die Objekte gefördert werden. Das ist eine besonders wichtige Gruppe von Anwendungen. Die geförderten Objekte bilden den Objektstrom. Deren Bewegungsrichtung und regelmäßig konstante Geschwindigkeit ist durch die Fördereinrichtung oder das Förderband festgelegt.

Der Steuer- und Auswertungseinheit ist die Geschwindigkeit der Objekte vorgegeben, insbesondere durch Parametrierung oder Verbindung mit einem weiteren Sensor oder einer übergeordneten Steuerung. Das ist eine von mehreren Möglichkeiten, die Geschwindigkeit als wichtigen Faktor der Kompensation der Bewegung zu kennen. Aus der tatsächlichen Geschwindigkeit des Objekts in der Welt können Schlüsse auf die Bewegung der entsprechenden Aufnahme des Objekts in den Einzelbildern gezogen werden. Die Geschwindigkeit ist in einigen Ausführungsformen vorab bekannt und kann parametriert werden, etwa bei einer festen Fördergeschwindigkeit. Alternativ ist denkbar, dass dies extern gemessen wird, beispielsweise mit Inkrementalgebern an einem Förderband, oder dass eine Förderersteuerung die Geschwindigkeit übergibt, mit der auch der Objektstrom bewegt wird.

Als erfindungsgemäße Alternative ist die Steuer- und Auswertungseinheit dafür ausgebildet, die Geschwindigkeit der Objekte aus den Bilddaten zu bestimmen. Dazu wird ein Referenzobjekt in bekanntem Abstand beobachtet, insbesondere ein Förderband. Die somit bestimmte Geschwindigkeit ist die tatsächliche Geschwindigkeit in der Welt, als Grundlage für eine spätere Bestimmung der Geschwindigkeit von aufgenommenen Objektstrukturen in den Einzelbildern.

Die Steuer- und Auswertungseinheit ist dafür ausgebildet, die Bewegung des Objektstroms aus der Geschwindigkeit der Bewegung eines aufgenommenen Objekts des bewegten Objektstroms sowie geometrischen und optischen Parametern zu bestimmen. So kann ganz unabhängig von den Bildinhalten der Einzelbilder eine Objektstruktur über die Einzelbilder verfolgt und der jeweilige Versatz durch die Bewegung des Objektstroms kompensiert werden. Dies gelingt in Kenntnis der tatsächlichen Geschwindigkeit der Objekte in dem Objektstrom sowie der geometrischen und optischen Randbedingungen. Zu den geometrischen Parametern zählt die Kameraposition relativ zu dem Objektstrom und insbesondere ein jeweiliger Objektabstand. Das kann durch einen einleitend schon erwähnten integrierten oder zusätzlichen Geometriesensor vermessen werden, teilweise lassen sich geometrische Parameter wie die Pose der Kameravorrichtung durch Kalibration gewinnen. Die optischen Parameter insbesondere eines Kameraobjektivs sind beispielsweise aus einer Spezifikation bekannt oder werden ebenfalls durch Kalibration bestimmt.

Die Steuer- und Auswertungseinheit ist bevorzugt dafür ausgebildet, die Bewegung des Objektsstroms für unterschiedliche Bildbereiche der Einzelbilder, insbesondere interessierende Bereiche mit unterschiedlichen Objekten, unterschiedlich zu kompensieren. In dieser Ausführungsform wird berücksichtigt, dass die Bewegung des Objektstroms sich in verschiedenen Abschnitten der Einzelbilder unterschiedlich auswirken kann. Das gilt insbesondere für den Fall mehrerer Objekte im selben Einzelbild, die einen unterschiedlichen Abstand zur Kameravorrichtung aufweisen. Ein nahes Objekt in kurzem Abstand bewegt sich von Einzelbild zu Einzelbild scheinbar schneller als ein fernes Objekt in größerem Abstand. Eine Beschränkung auf interessierende Bereiche (ROI, Region of Interest) hat zudem den Vorteil, dass weniger Rechenaufwand anfällt. Bewegungsunschärfe außerhalb der interessierenden Bereiche bleibt dann womöglich unkompensiert oder unzureichend kompensiert, spielt aber auch keine praktische Rolle.

Die Steuer- und Auswertungseinheit ist dafür ausgebildet, die Kompensation der Bewegung zum Ausgleich von Linsenfehlern und einer projektiven Verzerrung mit unterschiedlicher Kompensation je nach Abstand zur Bildmitte an die jeweilige Position innerhalb der Einzelbilder anzupassen. Abbildungsfehler des Objektivs und Verzerrungen aufgrund der projektiven Kameraperspektive können ebenfalls dazu führen, dass der für eine Kompensation der Bewegung des Objektstroms erforderliche Versatz über ein Einzelbild hinweg variiert. Insbesondere ist deshalb für eine besonders wirksame Kompensation ein unterschiedlicher Versatz in der Bildmitte gegenüber dem Bildrand zu berücksichtigen. Das kann in nur zwei diskreten Stufen Bildmitte gegen Bildrand oder mit feinerer Abstufung bis hin zu einer Abstandsfunktion zur Bildmitte geschehen.

Die Steuer- und Auswertungseinheit ist bevorzugt dafür ausgebildet, Auswirkungen der Bewegung des Objektstroms auf die Einzelbilder aus einer Korrelation der Einzelbilder zu bestimmen. Bisher wurden Ausführungsformen beschrieben, die einen auftretenden Versatz von Objektstrukturen über die Einzelbilder aufgrund der Bewegung des Objektstroms aus der Physik schätzen, also der tatsächlichen Geschwindigkeit des Objektstroms und der geometrischen und optischen Parameter der Aufnahme. Alternativ oder zusätzlich ist möglich, Bildmerkmale über Einzelbilder hinweg wiederzufinden und beim Kombinieren von Einzelbildern übereinander zu legen. Dazu werden Korrespondenzen aufgefunden oder Korrelationen berechnet.

Die Steuer- und Auswertungseinheit ist bevorzugt dafür ausgebildet, die Einzelbilder über Pixelelemente quer zur Bewegungsrichtung aufzusummieren und somit nur eine eindimensionale Korrelation zu bestimmen. Anschaulich gesprochen werden die Einzelbilder spaltenweise aufaddiert und so auf eine Zeile projiziert, wenn ohne Beschränkung der Allgemeinheit die Zeilenrichtung des Bildsensors der Bewegungsrichtung des Objektstroms entspricht. Nach diesem Aufsummieren muss nur noch mit erheblich reduziertem Aufwand eine eindimensionale Korrelation zwischen den derart komprimierten Einzelbildern bestimmt werden, um den notwendigen Versatz für die Kompensation der Bewegung des Objektsstroms zu finden.

Die Steuer- und Auswertungseinheit ist bevorzugt dafür ausgebildet, immer wieder Einzelbilder aufzunehmen, solange sich ein Objekt im Sichtbereich der Kameravorrichtung befindet. Herkömmlich wird mit einer vergleichsweise langen Belichtungszeit nur ein einziges Bild des jeweiligen Objekts aufgenommen, sobald es sich im Laufe der Bewegung des Objektstroms in einer günstigen, üblicherweise zentralen Position im Sichtbereich befindet. Je nach Gegebenheiten werden auch mehrere, aber jedenfalls wenige Bilder aufgenommen. Die erfindungsgemäß aufgenommenen Einzelbilder haben dagegen eine extrem kurze Belichtungszeit und sind binär oder quasi-binär. Der jeweilige Versatz durch die zwischenzeitliche Weiterbewegung des Objektstroms wird ohnehin kompensiert. Es steht ein im Vergleich zur Belichtungszeit eines Einzelbildes sehr langes Zeitintervall zur Verfügung, um zahlreiche Einzelbilder eines Objekts aufzunehmen, bis es den Sichtbereich wieder verlassen hat. Es ist nicht zwingend erforderlich, die gesamte verfügbare Zeit auszunutzen, es genügen auch beispielsweise mehr als 20%, 50% oder 80% davon. So können dutzende oder hunderte von Einzelbildern eines Objekts im Sichtbereich erfasst werden, ehe es den Sichtbereich wieder verlassen hat. Das hat insbesondere Vorteile bei Reflexen. Wird wie herkömmlich nur ein einziges Bild aufgenommen, so kann dies unter ungünstigen Reflexionsbedingungen stark überbelichtet sein. Das wird aber höchstens einen kleinen Teil der zahlreichen erfindungsgemäß aufgenommenen und kombinierten Einzelbilder betreffen, so dass das gemeinsame Bild immer noch auswertbar bleibt.

Die Steuer- und Auswertungseinheit ist bevorzugt dafür ausgebildet, in dem gemeinsamen Bild Codebereiche zu identifizieren und deren Codeinhalt auszulesen. Damit wird die Kameravorrichtung zu einem kamerabasierten Codeleser für Barcodes und/oder 2D-Codes nach diversen Standards, gegebenenfalls auch für eine Texterkennung (OCR, Optical Character Reading). Bei Codeleseranwendungen ist besonders wichtig, dass sämtliche Codebereiche in hoher Qualität aufgenommen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine Darstellung einer Kamera, die über einer Fördereinrichtung mit darauf geförderten Objekten montiert ist;

Fig. 2    ein Beispiel für einen zu lesenden Code;

Fig. 3    ein beispielhaftes Einzelbild des Codes gemäß Figur 2, das mit einem Hochfrequenz-Binärbildsensor aufgenommen wurde;

Fig. 4    ein noch deutlich durch Bewegungsunschärfe verwaschenes gemeinsames Bild durch Kombination einer Vielzahl von Einzelbildern gemäß Figur 3;

Fig. 5    eine Darstellung der spaltenweise aufsummierten Pixelwerte zweier Einzelbilder, um zu veranschaulichen, wie ein Versatz der Einzelbilder durch zwischenzeitliche Bewegung mittels Korrelation bestimmt werden kann;

Fig. 6    eine schematische Schnittansicht auf das Sichtfeld einer Kamera, durch das Objekte unterschiedlicher Höhe gefördert werden;

Fig. 7    eine schematische Darstellung des Sichtfeldes einer Kamera zur Illustration der Bestimmung des zur Kompensation erforderlichen Versatzes zwischen zwei Einzelbildern; und

Fig. 8    ein gemeinsames Bild aus einer Kombination einer Vielzahl von Einzelbildern gemäß Figur 3 nun mit Kompensation der Bewegung des Objektstroms zwischen zwei Aufnahmen von Einzelbildern.

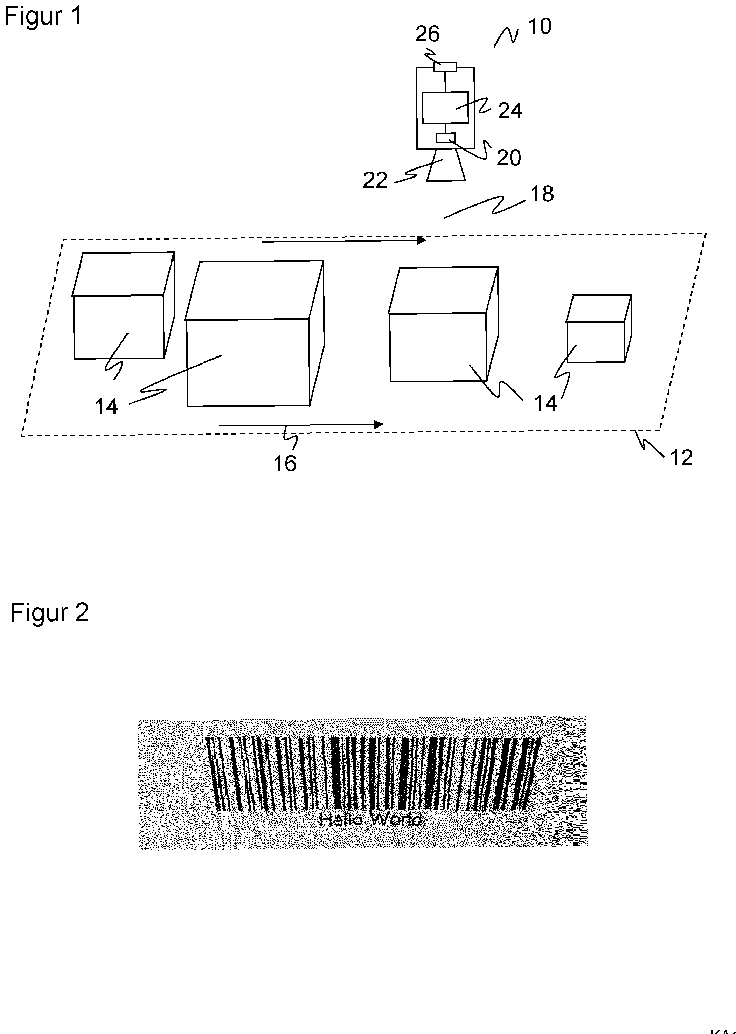

Figur 1 zeigt eine Kamera 10, die über einem Förderband 12 montiert ist, welches Objekte 14, wie durch den Pfeil 16 angedeutet, durch das Sichtfeld 18 der Kamera 10 fördert. Diese stationäre Anwendung der Kamera 10 an einem Förderband ist ein häufiger Fall aus der Praxis. Die Erfindung bezieht sich aber zunächst auf die Kamera 10 selbst, die Objekte 14 in einem Objektstrom beliebiger Ursache beobachtet, so dass weder die besonders vorteilhafte Perspektive von oben noch das Anwendungsbeispiel insgesamt einschränkend verstanden werden darf.

Die Kamera 10 erfasst mit einem Bildsensor 20 über ein nur rein schematisch gezeigtes Objektiv 22 jeder an sich bekannten Bauart Bildinformationen der geförderten Objekte 14. Der Bildsensor 20 umfasst in der Regel eine Matrix- oder Zeilenanordnung von Pixeln. Die Besonderheit des erfindungsgemäß eingesetzten Bildsensors 20 ist, dass es sich um einen Hochfrequenz-Binärbildsensor handelt. Im Gegensatz zu einem herkömmlichen Bildsensor werden dabei in den jeweiligen Pixeln nicht Ladungen über ein gewisses Integrationsfenster gesammelt, sondern gleichsam nur Einzelereignisse in Form einfallender Photonen entweder binär registriert oder in einem Multibit-Zähler gezählt. Einige beispielhafte Technologien hierfür wurden in der Diskussion des Standes der Technik kurz vorgestellt, nämlich ein SPAD-Bildsensor (Single-Photon Avalanche Diode) oder ein QIS-Bildsensor (Quanta Image Sensor). Weitere vorteilhafte technische Merkmale eines Hochfrequenz-Binärbildsensors sind insbesondere den einleitend zitierten Dokumenten zu entnehmen.

Die eigentliche Aufgabe der Kamera 10 spielt für die Erläuterung der Erfindung eine nebengeordnete Rolle. Jedenfalls geht es um eine Bildauswertung, die qualitativ hochwertige Aufnahmen erfordert. Beispielsweise werden die Objekte 14 auf bestimmte Merkmale geprüft oder vermessen. Insbesondere ist eine Weiterbildung als kamerabasierter Codeleser vorstellbar, mit dem dann Codebereiche auf den Objekten 14 erfasst und die dort angebrachten Codes ausgelesen werden.

Für derartige Bildauswertungen ist eine Steuer- und Auswertungseinheit 24 mit dem Bildsensor 20 verbunden, die dessen Aufnahmen auslöst, die jeweiligen Bildinformationen ausliest und weiterverarbeitet. Die Steuer- und Auswertungseinheit 24 weist mindestens einen digitalen Rechenbaustein auf, wie mindestens einen Mikroprozessor, mindestens ein FPGA (Field Programmable Gate Array), mindestens einen DSP (Digital Signal Processor), mindestens ein ASIC (Application-Specific Integrated Circuit), mindestens eine VPU (Video Processing Unit) oder mindestens einen Neural Processor. Insbesondere in Codeleseanwendungen wird häufig eine Vorverarbeitung auf einen eigenen digitalen Rechenbaustein ausgelagert, für Vorverarbeitungsschritte wie eine Entzerrung, eine Helligkeitsanpassung, eine Binarisierung, eine Segmentierung, das Auffinden von interessierenden Bereichen (ROI, Region of Interest), speziell Codebereichen und dergleichen. Die eigentliche Bildverarbeitung nach dieser Vorverarbeitung erfolgt dann vorzugsweise in mindestens einem Mikroprozessor. Die Steuer- und Auswertungseinheit 24 kann überdies zumindest teilweise extern der Kamera 10 vorgesehen sein, etwa in einer übergeordneten Steuerung, einem angeschlossenen Netzwerk, einem Edge-Device oder einer Cloud. Das Vorgehen der Steuer- und Auswertungseinheit 24 zum Erfassen hochwertiger Bilder der bewegten Objekte 14 mit einem Hochfrequenz-Binärbildsensor wird im Anschluss unter Bezugnahme auf die Figuren 2 bis 8 näher erläutert.

Über eine Schnittstelle 26 gibt die Kamera 10 Informationen aus, wie Bilddaten oder daraus gewonnene Auswertungsergebnisse. Sofern die Funktionalität der Steuer- und Auswertungseinheit 24 zumindest teilweise außerhalb der Kamera 10 vorgesehen ist, kann die Schnittstelle 26 für die dafür notwendige Kommunikation genutzt werden. Umgekehrt kann die Kamera 10 über die Schnittstelle 26 oder eine weitere Schnittstelle Informationen von weiteren Sensoren oder einer übergeordneten Steuerung erhalten. Dadurch ist beispielsweise möglich, eine feste oder aktuelle Fördergeschwindigkeit des Förderbandes an die Kamera 10 zu übermitteln oder Geometrieinformationen über die Objekte 14 zu erhalten, insbesondere deren Abstand zur Kamera 10.

Figur 2 zeigt ein Bild eines beliebigen zu lesenden Codes, um damit die Erfindung am Anwendungsbeispiel des Codelesens näher auszuführen. Die in Figur 2 gezeigte Aufnahme ist noch nicht mit einem Hochfrequenz-Binärbildsensor aufgenommen, sondern idealisiert ohne Bewegungsunschärfe und bei ausreichender Belichtungszeit von einem herkömmlichen Bildsensor erzeugt und dient lediglich dem Vergleich für ein besseres Verständnis der Erfindung.

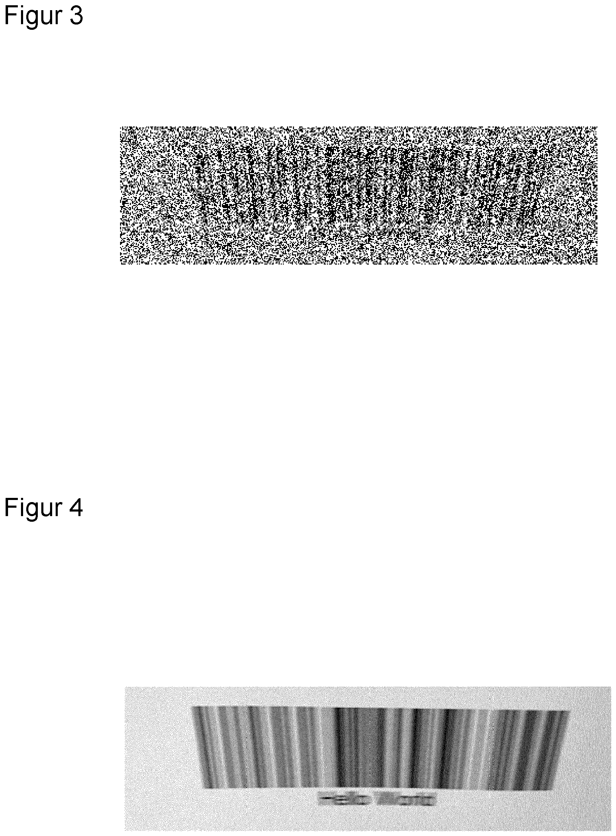

Figur 3 zeigt ein beispielhaftes Einzelbild des Codes gemäß Figur 2, das nun mit einem Hochfrequenz-Binärbildsensor aufgenommen wurde. Die Aufnahme erfolgt mit einer sehr kurzen Belichtungszeit, die hunderte, tausende und noch mehr Aufnahmen in einer Sekunde ermöglicht. Jedes Pixel erkennt binär, ob innerhalb der sehr kurzen Belichtungszeit ein Photon eingefallen ist oder nicht. Dadurch entsteht ein Binärbild oder Schwarz-Weißbild. Alternativ werden Photonen in einem Quasi-Binärbild mit sehr wenigen Graustufen gezählt, wobei Zählerwerte 0, 1, 2, ..., x mit einer kleinen natürlichen Zahl x entsprechend der gezählten Photonen vorkommen können. Durch die kurze Belichtungszeit und die Detektion einzelner Photonen entsteht ein starkes Rauschen, da neben den eigentlichen Bildmerkmalen ein erheblicher Zufallseffekt eine Rolle spielt, ob eine helle Umgebungs- oderCodestrukturtatsächlich ein im zugehörigen Pixel registriertes Photon erzeugt hat beziehungsweise ein Pixel, das eigentlich einer dunkeln Codestruktur zugeordnet ist, durch ein Streuphoton oder ein Dunkelereignis doch ein Ereignis registriert hat. Das Einzelbild ist untauglich, um den Code zu lesen. Dennoch sind mit dem bloßen Auge die Barcodestrukturen bereits erkennbar.

Der erfindungsgemäße Ansatz besteht darin, die Codestrukturen durch Aufsummieren einer großen Anzahl von dutzenden, hunderten oder sogar tausenden von Einzelbildern deutlich hervortreten zu lassen, weil sich die genannten Zufallseffekte dann ausmitteln. In den hier betrachteten Anwendungssituationen bewegen sich jedoch die Objekte 14 im Objektstrom. Ein naives direktes Aufsummieren von Einzelbildern führt daher zu einem gemeinsamen Bild, das durch Bewegungsunschärfe stark verwaschen wirkt, also eine unzureichende Bildschärfe aufweist. Figur 4 zeigt ein Beispiel von 10.000 aufsummierten Einzelbildern, die in der Bewegung aufgenommen wurden.

Die Bewegungsunschärfe lässt sich zumindest weitgehend eliminieren, wenn beim Aufsummieren der Einzelbilder die jeweilige zwischenzeitliche Bewegung des Objekts 14 berücksichtigt wird. Vorzugsweise bewegt sich der Objektstrom nur in einer Richtung, wie in der Förderbandanwendung gemäß Figur 1, so dass sich dann nur ein eindimensionales Problem stellt. In der Regel ist dabei zudem die Geschwindigkeit konstant, wobei ebenso möglich ist, ein nicht-konstantes Geschwindigkeitsprofil zu berücksichtigen.

Es gibt verschiedene Möglichkeiten, die Bewegung des Objektsstroms bei der Kombination der Einzelbilder zu kompensieren. Diese lassen sich grob einteilen in merkmalsbasierte Verfahren, die sich auf Bildinhalte der Einzelbilder stützen, und externe oder physikalische Verfahren, die die Auswirkungen der Bewegung unabhängig von Bildinhalten der Einzelbilder bestimmen. Beides kann auch miteinander kombiniert werden, beispielsweise indem die tatsächliche Bewegung als Anhaltspunkt für die Suche nach korrespondierende Bildmerkmalen in verschiedenen Einzelbildern verwendet wird.

Bei einem merkmalsbasierten Verfahren findet ein Algorithmus den optimalen Versatz, der auf ein Einzelbild angewandt wird, um beim Aufsummieren die Bewegung zwischen der Aufnahme zweier Einzelbilder auszugleichen. Wie später noch diskutiert, ist auch denkbar, den Versatz über Bildbereiche zu variieren, beispielsweise weil mehrere Objekte in unterschiedlichem Abstand aufgenommen werden, die sich dann scheinbar mit unterschiedlichen Geschwindigkeiten durch die Einzelbilder bewegen. Der Algorithmus erkennt Objekte oder deren charakteristische Bildmerkmale in den Einzelbildern wieder, woraus der gesuchte Versatz resultiert. Geeignete Verfahren hierfür sind Template-Matching oder Korrelationen. Der Stand der Technik kennt eine Vielzahl hochwertiger Algorithmen zum Auffinden oder Verfolgen korrespondierender Bildmerkmale über eine Bildersequenz hinweg, auf die zurückgegriffen werden kann.

In einer großen Gruppe von relevanten Anwendungsfällen gibt es eine feste Bewegungsrichtung. Das Korrespondenz- oder Korrelationsproblem ist daher im Grunde eindimensional. Um dies auszunutzen, können die Einzelbilder orthogonal zur Bewegungsrichtung aufsummiert werden. In einer vorteilhaften Implementierung sind die Zeilen oder Spalten des Bildsensors 20 in Bewegungsrichtung ausgerichtet, so dass das Aufsummieren sehr einfach über die Spalten beziehungsweise Zeilen erfolgen kann. Aus jedem Einzelbild entsteht dann ein eindimensionales Datenfeld, und auf dieser Basis kann mit wenig Aufwand eine Kreuzkorrelation berechnet werden.

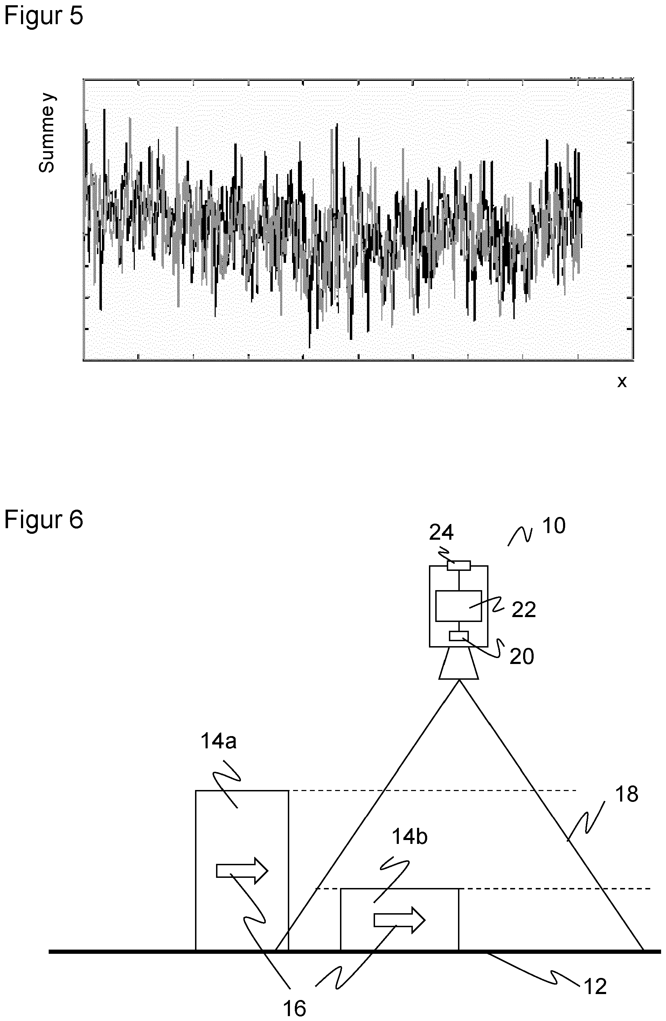

Figur 5 zeigt in grau und schwarz zwei in der geschilderten Weise spaltenweise aufaddierte Einzelbilder. Einerseits ist eine gewisse Parallelität in den Verläufen zu erkennen, so dass eine Kreuzkorrelation ein Maximum erwarten lässt, das als der gesuchte Versatz verwendet werden kann. Andererseits sind wegen des starken Rauschens nicht unbedingt ganz klare, eindeutigen Merkmale zu erwarten. Das gilt nicht nur für den zuletzt diskutierten eindimensionalen Fall, sondern für jegliche merkmalsbasierte Verfahren. Deshalb kann es sinnvoll sein, ein merkmalsbasiertes Verfahren durch ein externes oder physikalisches Verfahren zu ersetzen oder zu ergänzen, und jene Verfahren werden nun weiter beschrieben.

Figur 6 zeigt dazu vorbereitend eine schematische Schnittansicht auf das Sichtfeld 18 (Field of View) der Kamera 10, durch das beispielhaft zwei Objekte 14a-b unterschiedlicher Höhe gefördert werden. Da die laterale Ausdehnung des Sichtfeldes 18 mit zunehmender Nähe zur Kamera 10 abnimmt, ist die von der Kamera 10 wahrgenommene Geschwindigkeit für höhere Objekte 14a größer als für niedrige Objekte 14b. Dabei ist wichtig, zwischen der wahrgenommenen Geschwindigkeit, also der Geschwindigkeit des Objektbildes auf dem Bildsensor 14 in Pixel/Zeit, und der realen Geschwindigkeit der Objekte 14a-b zu unterscheiden. Letztere ist selbstverständlich von der Höhe der Objekte 14a-b gänzlich unabhängig.

Die reale Geschwindigkeit lässt sich auf vielfältige Weise bestimmen. Sie wird beispielsweise parametriert, entsprechend der vorgesehenen Fördergeschwindigkeit in der Anwendung, mit einem externen Sensor gemessen, insbesondere einem Inkrementalgeber, oder von einer übergeordneten Steuerung mitgeteilt, die ihrerseits die Geschwindigkeit vorgibt oder mit eigenen Sensoren misst. Denkbar ist auch, das Förderband 12 in einer Kalibrationsphase mit optischen Markern zu versehen und deren wahrgenommene Geschwindigkeit mit einem merkmalsbasierten Verfahren zu messen, das unter solchen günstigen Bedingungen sehr genau funktioniert. Da der Abstand von der Kamera 10 zum Förderband 12 bekannt ist, kann diese wahrgenommene Geschwindigkeit in die reale Geschwindigkeit umgerechnet werden. Die optischen Marker ermöglichen es, das ansonsten strukturlose Förderband 12 verlässlich zu erkennen. Vorzugsweise dienen dazu aktive Marker, etwa mit dem Förderband mitlaufende LEDs. Sie können sogar noch einen eindeutig erkennbaren optischen Code erzeugen, etwa eine Blinksequenz, wobei eine regelmäßige Wiederholung mit einer bestimmten Frequenz oft schon ausreicht.

Die wahrgenommene Geschwindigkeit der jeweiligen Objekte 14a-b in der jeweiligen Anwendungssituation hingegen ist gesucht, da hieraus der Versatz von Objektstrukturen zwischen zwei Einzelbildern unmittelbar abgeleitet werden kann. Oben wurden merkmalsbasierte Verfahren mit diesem Ziel beschrieben. In Kenntnis der geometrischen Parameter der Kamera 10 und ihrer Position und Ausrichtung bezüglich der Objekte 14a-b sowie der optischen Parameter der Kamera 10 kann in einem externen oder physikalischen Verfahren aus der realen Geschwindigkeit auf die wahrgenommene Geschwindigkeit geschlossen werden. Dabei werden geometrische und optische Parameter durch eine Kalibration oder Parametrierung gewonnen. Abstände und Geometrien können überdies fortlaufend durch einen integrierten oder externen Distanzsensor gemessen werden, insbesondere einen vorgelagerten Laserscanner. Darüber kann auch die Information gewonnen werden, wann ein Objekt 14a-b anfängt und aufhört beziehungsweise in das Sichtfeld 18 eintritt und es wieder verlässt. Ein etwaiger Zeitversatz zwischen geometrischen Messungen und Aufnahmen von Einzelbildern ist in Kenntnis der Bewegungsgeschwindigkeit leicht auszugleichen.

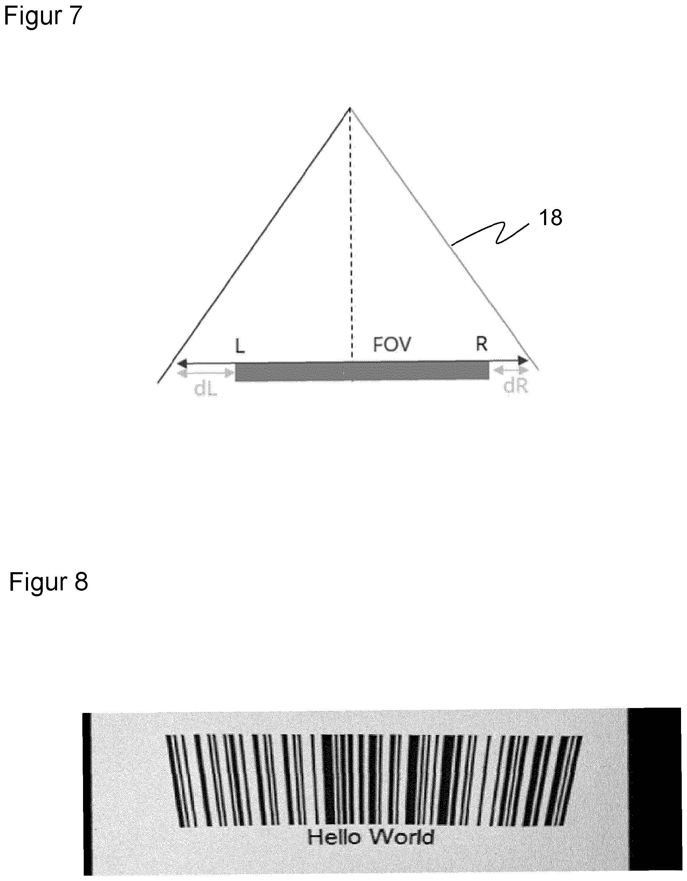

Dazu zeigt Figur 7 nochmals eine schematische Darstellung des Sichtfeldes 18 der Kamera 10. Gesucht ist die wahrgenommene Objektgeschwindigkeit in pixel/s, die von dem verwendeten Objektiv 22, dem Abstand des jeweiligen Objekts 14a-b zu der Kamera 10 und der realen Geschwindigkeit des Objekts 14a-b abhängt. Es gilt hier:

FOV(1pixel)=(d/f-1)*Pixelpitch mit d Objektabsrand und f Brennweite des Objektivs 22, sowie FOV(1pixel)/v = t/Pixel.

Daraus folgt für die wahrgenommene Objektgeschwindigkeit $v_{pixel}$ in pixel/s:

$$v_{pixel} = dx_{pixel}/dt = 1pixel* v_{obj}/FOV = 1pixel*v_{obj}/((d/f-1)*pixSize)$$

wobei $v_{obj}$ die reale Geschwindigkeit des Objekts in m/s und pixSize die Größe des Pixels ist.

Bei einer vorgelagerten Geometrie- beziehungsweise Distanzmessung sind ein Startsignal für den Eintritt in den Sichtbereich 18 und ein Endsignal für den Austritt entsprechend der Positionen von Geometriesensor und Kamera 10 um eine Zeitverzögerung anzupassen. Sie beträgt $dT=v_{obj}/dX$ für das Startsignal, wobei dX der Abstand zwischen Beginn des Sichtbereichs 18 und Geometriesensor ist, beziehungsweise $dT=v_{obj}/(dX+FOV)$ für das Endsignal bei zusätzlicher Berücksichtigung der Breite FOV des Sichtbereichs 18. Eine zumindest annähernd konstante reale Geschwindigkeit $v_{obj}$ darf in typischen Anwendungen angenommen werden.

Hiermit ist nun bekannt, welche Pixelreihen in welcher Zeit für welches Objekt 14a-b von Interesse ist. Mit den Geometrieinformationen L und R, mit der in Bewegungsrichtung betrachtet die linke und rechte Kante des Objekts 14a-b bezeichnet werden, können diese Daten noch in Pixelzeilen übersetzt werden.

Das Field of View der Kamera 10 ist in Abhängigkeit der Anzahl der Pixel pixNum in einer Kamerazeile gegeben durch $Fov_{tot}$= (d/f-1) * pixSize*pixNum.

L und R sind in Meter oder einer sonstigen bekannten Längeneinheit angegeben. Die geometrischen Parameter, die den Bezug zwischen L und R und der optischen Achse der Kamera 10, die den Mittelpunkt des Field of View darstellt, sind bekannt, indem sie parametriert oder vorbereitend bestimmt werden. Über diese Relation lassen sich nun L und R in $FOV_{tot}$ übertragen und so Differenzen dR und dL zu dem Field of View bestimmen. Daraus wiederum können die Pixel zwischen pixelStart und pixelEnd ermittelt werden, die dem Objekt 14a-b im aktuellen Zeitpunkt und damit im Einzelbild entsprechen:

$$pixelStart=pixNum*dL/FOV(1Pix)=dL*1pix*v_{obj}/((d/f-1)*pixSize)$$

und

$$pixelEnd=pixNum(1- dR/FOV(1Pix))= pixNum(1- dR/((d/f-1)*pixSize)).$$

Damit ist bekannt, welche Regionen in den Einzelbildern mit welchem Versatz zu verschieben sind, ehe sie zum Kombinieren in ein gemeinsames Bild aufaddiert werden.

Figur 8 zeigt ein gemeinsames Bild, das aus einer Kombination einer Vielzahl von Einzelbildern gemäß Figur 3 entstanden ist, wobei nun für jedes aufaddierte Einzelbild eine der beschriebenen Kompensationen für die zwischenzeitliche Bewegung der Objekte 14a-b erfolgte, im gezeigten Beispiel mittels eines physikalischen Verfahrens. Die Bildqualität ähnelt dem Vergleichsbild der Figur 2, die Bewegungsunschärfe gemäß Figur 4 ist eliminiert. Mit dem gemeinsamen Bild aus Figur 8 kann ein Decoder problemlos arbeiten.

Eine Besonderheit bei dieser Vorgehensweise ist, dass kontinuierlich Daten in Form von Einzelbildern gesammelt werden können, solange sich ein Objekt 14a-b im Sichtbereich 18 befindet. Mit einem herkömmlichen Bildsensor hingegen wird nur eine Momentaufnahme in einer festen Position erzeugt. Die kontinuierliche Mehrfachaufnahme von Einzelbildern ist insbesondere bei Direktreflexen von Vorteil. Das tritt nur lokal an einer bestimmten Position des Objekts 14a-b auf und wird deshalb im gemeinsamen Bild unterdrückt. War hingegen in der herkömmlichen Vorgehensweise die ungünstige Position mit Direktreflex gerade die Aufnahmeposition, so sind die Bilddaten unbrauchbar, der Code könnte nicht gelesen werden.

Wie im Zusammenhang mit den Erläuterungen zu Figur 6 und 7 schon angeklungen, ist der Versatz zwischen den Einzelbildern nicht unbedingt ein einziger globaler Versatz des gesamten Einzelbildes. Das ist möglich, aber eine Vereinfachung. Werden wie zu einem etwas späteren Zeitpunkt der Situation der Figur 6 mehrere Objekte 14a-b in unterschiedlichen Abständen zugleich aufgenommen, so sollte vorzugsweise jedes Objekts 14a-b einen eigenen Versatz kompensieren. Die Kompensation erfolgt dann unterschiedlich je Bildbereich, insbesondere je interessierendem Bereich mit einem jeweiligen Objekt 14a-b.

Der Versatz kann zusätzlich oder alternativ noch aus einem anderen Grund lokal je Bildbereich des Einzelbildes bestimmt und berücksichtigt werden, nämlich aufgrund von Linsenfehlern beziehungsweise einer projektiven Verzerrung. Das führt dazu, dass bei an sich gleicher Geschwindigkeit am Bildrand ein anderer Versatz erzeugt wird als in der Bildmitte, und wenn dies ausgeglichen wird, ist das entstehende gemeinsame Bild von noch höherer Qualität.

**Patentansprüche**

1. Kameravorrichtung (10), die einen Bildsensor (20) mit einer Vielzahl von Pixelelementen zur Aufnahme von Bilddaten eines in einer Bewegungsrichtung (16) relativ zu der Kameravorrichtung (10) bewegten Objektsstroms von Objekten (14), wobei der Bildsensor (20) als Hochfrequenz-Binärbildsensor ausgebildet ist, der Einzelbilder geringer Bittiefe mit hoher Wiederholfrequenz erzeugt, sowie eine Steuer- und Auswertungseinheit (24) aufweist, die dafür ausgebildet ist, die Bilddaten aus dem Bildsensor (20) auszulesen und weiterzuverarbeiten und

eine Vielzahl wiederholter Aufnahmen von Einzelbildern des Bildsensors (20) auszulösen und die Einzelbilder unter Kompensation der Bewegung des Objektstroms zwischen den Aufnahmen zu einem gemeinsamen Bild zu kombinieren, **dadurch gekennzeichnet,**
**dass** die Steuer- und Auswertungseinheit (24) dafür ausgebildet ist, die Bewegung des Objektstroms aus der Geschwindigkeit der Bewegung eines aufgenommenen Objekts (14) des bewegten Objektstroms sowie geometrischen und optischen Parametern zu bestimmen, um so unabhängig von Bildinhalten der Einzelbilder eine Objektstruktur über die Einzelbilder zu verfolgen, wobei der Steuer- und Auswertungseinheit (24) die Geschwindigkeit der Objekte (14) vorgegeben ist oder die Steuer- und Auswertungseinheit (24) die Geschwindigkeit der Objekte durch Beobachtung eines Referenzobjekts in bekanntem Abstand bestimmt und **dass** die Steuer- und Auswertungseinheit (24) dafür ausgebildet ist, die Kompensation der Bewegung zum Ausgleich von Linsenfehlern und einer projektiven Verzerrung mit unterschiedlicher Kompensation je nach Abstand zur Bildmitte an die jeweilige Position innerhalb der Einzelbilder anzupassen.

2.   Kameravorrichtung (10) nach Anspruch 1,
wobei der Bildsensor (20) als SPAD-Bildsensor oder QIS-Bildsensor ausgebildet ist.

3.   Kameravorrichtung (10) nach Anspruch 1 oder 2,
wobei die Einzelbilder Binärbilder oder Quasi-Binärbilder mit höchstens zehn Zählerzuständen der Pixelelemente sind.

4.   Kameravorrichtung (10) nach einem der vorhergehenden Ansprüche, wobei die Bewegung des Objektstroms gleichförmig ist.

5.   Kameravorrichtung (10) nach einem der vorhergehenden Ansprüche, die stationär an einer Fördereinrichtung (12) montiert ist, auf der die Objekte (14) gefördert werden.

6.   Kameravorrichtung (10) nach einem der vorhergehenden Ansprüche, wobei der Steuer- und Auswertungseinheit (24) die Geschwindigkeit der Objekte (14) durch Parametrierung oder Verbindung mit einem weiteren Sensor oder einer übergeordneten Steuerung vorgegeben ist.

7.   Kameravorrichtung (10) nach einem der vorhergehenden Ansprüche, wobei die Steuer- und Auswertungseinheit (24) dafür ausgebildet ist, die Bewegung des Objektsstroms für unterschiedliche Bildbereiche der Einzelbilder, insbesondere interessierende Bereiche mit unterschiedlichen Objekten (14), unterschiedlich zu kompensieren.

8.   Kameravorrichtung (10) nach einem der vorhergehenden Ansprüche, wobei die Steuer- und Auswertungseinheit (24) dafür ausgebildet ist, Auswirkungen der Bewegung des Objektstroms auf die Einzelbilder aus einer Korrelation der Einzelbilder zu bestimmen.

9.   Kameravorrichtung (10) nach Anspruch 8,
wobei die Steuer- und Auswertungseinheit (24) dafür ausgebildet ist, die Einzelbilder über Pixelelemente quer zur Bewegungsrichtung (16) aufzusummieren und somit nur eine eindimensionale Korrelation zu bestimmen.

10.   Kameravorrichtung (10) nach einem der vorhergehenden Ansprüche, wobei die Steuer- und Auswertungseinheit (24) dafür ausgebildet ist, immer wieder Einzelbilder aufzunehmen, solange sich ein Objekt (14) im Sichtbereich (18) der Kameravorrichtung (10) befindet.

11.   Kameravorrichtung (10) nach einem der vorhergehenden Ansprüche,
wobei die Steuer- und Auswertungseinheit (24) dafür ausgebildet ist, in dem gemeinsamen Bild Codebereiche zu identifizieren und deren Codeinhalt auszulesen.

12.   Verfahren zu Erfassung von Objekten (14) eines sich in einer Bewegungsrichtung (16) bewegenden Objektstroms, bei dem Bilddaten des Objektstroms von einem Bildsensor (20) mit einer Vielzahl von Pixelelementen aufgenommen und ausgewertet werden, wobei der Bildsensor (20) als Hochfrequenz-Binärbildsensor ausgebildet ist, der Einzelbilder geringer Bittiefe mit hoher Wiederholfrequenz erzeugt, und wobei eine Vielzahl wiederholter Aufnahmen von Einzelbildern des Bildsensors (20) erzeugt wird und die Einzelbilder unter Kompensation der Bewegung des Objektstroms zwischen den Aufnahmen zu einem gemeinsamen Bild kombiniert werden,
**dadurch gekennzeichnet,**

**dass** die Bewegung des Objektstroms aus der Geschwindigkeit der Bewegung eines aufgenommenen Objekts (14) des bewegten Objektstroms sowie geometrischen und optischen Parametern bestimmt wird, um so unabhängig von Bildinhalten der Einzelbilder eine Objektstruktur über die Einzelbilder zu verfolgen, wobei die Geschwindigkeit der Objekte (14) vorgegeben ist oder die Geschwindigkeit der Objekte durch Beobachtung eines Referenzobjekts in bekanntem Abstand bestimmt wird

und die Kompensation der Bewegung zum Ausgleich von Linsenfehlern und einer projektiven Verzerrung mit unterschiedlicher Kompensation je nach Abstand zur Bildmitte an die jeweilige Position innerhalb der Einzelbilder angepasst wird.

**Claims**

1. A camera device (10) comprising an image sensor (20) having a plurality of pixel elements for recording image data of an object stream of objects (14) moving in a direction of movement (16) relative to the camera device (10), the image sensor (20) being configured as a high-frequency binary image sensor that generates individual images of low bit depth with a high repetition frequency, and a control and evaluation unit (24) configured to read out and further process the image data from the image sensor (20) and to trigger a plurality of repeated exposures of individual images of the image sensor (20) and to combine the individual images into a common image while compensating for the movement of the object stream between the exposures,

   **characterized in that** the control and evaluation unit (24) is configured to determine the movement of the object stream from the speed of movement of a recorded object (14) of the moving object stream as well as geometric and optical parameters, in order to track an object structure via the individual images independently of the image contents of the individual images, wherein the speed of the objects (14) is predetermined for the control and evaluation unit (24) or the control and evaluation unit (24) determines the speed of the objects by observing a reference object at a known distance
   and **in that** the control and evaluation unit (24) is configured to adapt the compensation of the movement to compensate for lens errors and a projective distortion with different compensation depending on the distance from the image center to the respective position within the individual images.

2. The camera device (10) according to claim 1,
   wherein the image sensor (20) is configured as a SPAD image sensor or QIS image sensor.

3. The camera device (10) according to claim 1 or 2,
   wherein the individual images are binary images or quasi-binary images with at most ten counter states of the pixel elements.

4. The camera device (10) according to any of the preceding claims,
   wherein the movement of the object stream is uniform.

5. The camera device (10) according to any of the preceding claims,
   which is stationarily mounted on a conveyor device (12) on which the objects (14) are conveyed.

6. The camera device (10) according to any of the preceding claims,
   wherein the speed of the objects (14) is predetermined for the control and evaluation unit (24) by parameterization or connection with a further sensor or a higher-level controller.

7. The camera device (10) according to any of the preceding claims,
   wherein the control and evaluation unit (24) is configured to compensate the movement of the object stream differently for different image areas of the individual images, in particular areas of interest with different objects (14).

8. The camera device (10) according to any of the preceding claims,
   wherein the control and evaluation unit (24) is configured to determine effects of the movement of the object stream on the individual images from a correlation of the individual images.

9. The camera device (10) according to claim 8,
   wherein the control and evaluation unit (24) is configured to sum up the individual images over pixel elements transversely to the direction of movement (16) and thus to determine only a one-dimensional correlation.

10. The camera device (10) according to any of the preceding claims,
    wherein the control and evaluation unit (24) is configured to repeatedly record individual images as long as an object (14) is located in the field of view (18) of the camera device (10).

**11.** The camera device (10) according to any of the preceding claims,
wherein the control and evaluation unit (24) is configured to identify code areas in the common image and to read out their code content.

**12.** A method for detecting objects (14) of an object stream moving in a direction of movement (16), wherein image data of the object stream are recorded and evaluated by an image sensor (20) having a plurality of pixel elements, the image sensor (20) being configured as a high-frequency binary image sensor that generates individual images of low bit depth with a high repetition frequency, and wherein a plurality of repeated images of individual images of the image sensor (20) are generated and the individual images are combined to form a common image while compensating for the movement of the object stream between the images,
**characterized in that** the movement of the object stream is determined from the speed of movement of a recorded object (14) of the moving object stream and geometric and optical parameters in order to track an object structure over the individual images independently of the image contents of the individual images, the speed of the objects (14) being predetermined or the speed of the objects being determined by observing a reference object at a known distance and the compensation of the movement is adapted to the respective position within the individual images with different compensation depending on the distance from the image center in order to compensate for lens errors and a projective distortion.

## Revendications

**1.** Dispositif de caméra (10) comprenant un capteur d'images (20) ayant une pluralité d'éléments de pixel pour l'enregistrement de données d'image d'un flux d'objets (14) en mouvement dans une direction de mouvement (16) par rapport au dispositif de caméra (10), le capteur d'images (20) étant conçu comme un capteur d'images binaires à haute fréquence qui génère des images individuelles de faible profondeur de bits avec une fréquence de répétition élevée, ainsi qu'une unité de commande et d'évaluation (24) conçue pour lire et traiter les données d'image à partir du capteur d'images (20) et

pour déclencher une pluralité de prises de vue répétées d'images individuelles du capteur d'images (20) et pour combiner les images individuelles en une image commune en compensant le mouvement du flux d'objets entre les prises de vue,
**caractérisé en ce que**
l'unité de commande et d'évaluation (24) est conçue pour déterminer le mouvement du flux d'objets à partir de la vitesse de mouvement d'un objet enregistré (14) du flux d'objets en mouvement et à partir de paramètres géométriques et optiques, afin de poursuivre ainsi une structure d'objet par l'intermédiaire des images individuelles, indépendamment des contenus d'image des images individuelles, la vitesse des objets (14) étant prédéfinie pour l'unité de commande et d'évaluation (24), ou l'unité de commande et d'évaluation (24) déterminant la vitesse des objets (14) par observation d'un objet de référence à une distance connue,
et **en ce que** l'unité de commande et d'évaluation (24) est conçue pour adapter la compensation du mouvement à la position respective à l'intérieur des images individuelles, afin de compenser des erreurs de lentille et une distorsion projective avec une compensation différente selon la distance par rapport au centre de l'image.

**2.** Dispositif de caméra (10) selon la revendication 1,
dans lequel le capteur d'images (20) est conçu comme un capteur d'images SPAD ou un capteur d'images QIS.

**3.** Dispositif de caméra (10) selon la revendication 1 ou 2,
dans lequel les images individuelles sont des images binaires ou des images quasi-binaires ayant au maximum dix états de comptage des éléments de pixel.

**4.** Dispositif de caméra (10) selon l'une des revendications précédentes, dans lequel le mouvement du flux d'objets est uniforme.

**5.** Dispositif de caméra (10) selon l'une des revendications précédentes, qui est monté de manière stationnaire sur un dispositif de convoyage (12) sur lequel les objets (14) sont convoyés.

**6.** Dispositif de caméra (10) selon l'une des revendications précédentes, dans lequel la vitesse des objets (14) est prédéfinie pour l'unité de commande et d'évaluation (24) par paramétrage ou par liaison avec un autre capteur ou une commande supérieure.

**7.** Dispositif de caméra (10) selon l'une des revendications précédentes, dans lequel l'unité de commande et d'évaluation (24) est conçue pour compenser différemment le mouvement du flux d'objets pour différentes zones d'image des images individuelles, en particulier pour des zones d'intérêt avec différents objets (14).

**8.** Dispositif de caméra (10) selon l'une des revendications précédentes, dans lequel l'unité de commande et d'évaluation (24) est conçue pour déterminer les effets du mouvement du flux d'objets sur les images individuelles à partir d'une corrélation des images individuelles.

**9.** Dispositif de caméra (10) selon la revendication 8,
dans lequel l'unité de commande et d'évaluation (24) est conçue pour additionner les images individuelles par l'intermédiaire d'éléments de pixel transversaux à la direction de mouvement (16) et pour déterminer ainsi uniquement une corrélation unidimensionnelle.

**10.** Dispositif de caméra (10) selon l'une des revendications précédentes, dans lequel l'unité de commande et d'évaluation (24) est conçue pour prendre des images individuelles toujours à nouveau tant qu'un objet (14) se trouve dans le champ de vision (18) du dispositif de caméra (10).

**11.** Dispositif de caméra (10) selon l'une des revendications précédentes, dans lequel l'unité de commande et d'évaluation (24) est conçue pour identifier des zones de code dans l'image commune et pour lire leur contenu de code.

**12.** Procédé de détection d'objets (14) d'un flux d'objets en mouvement dans une direction de mouvement (16), dans lequel des données d'image du flux d'objets sont enregistrées par un capteur d'images (20) avec une pluralité d'éléments de pixel et sont évaluées, dans lequel le capteur d'images (20) est conçu comme un capteur d'images binaires à haute fréquence qui génère des images individuelles de faible profondeur de bit avec une fréquence de répétition élevée, et une pluralité de prises de vue répétées d'images individuelles du capteur d'images (20) est générée et les images individuelles sont combinées en une image commune en compensant le mouvement du flux d'objets entre les prises de vue,
**caractérisé en ce que**

le mouvement du flux d'objets est déterminé à partir de la vitesse de mouvement d'un objet enregistré (14) du flux d'objets en mouvement et à partir de paramètres géométriques et optiques, afin de poursuivre ainsi une structure d'objet par l'intermédiaire des images individuelles, indépendamment des contenus d'image des images individuelles, la vitesse des objets (14) étant prédéfinie ou la vitesse des objets étant déterminée par observation d'un objet de référence à une distance connue,
et la compensation du mouvement est adaptée à la position respective à l'intérieur des images individuelles, afin de compenser des erreurs de lentille et une distorsion projective avec une compensation différente selon la distance par rapport au centre de l'image.

Figur 1

Figur 2

Hello World

Figur 3

Figur 4

Figur 5

Figur 6

Figur 7

Figur 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8749649 B1
- EP 2284764 B1
- US 9831283 B2
- US 2021125362 A1
- US 2006249581 A1

**In der Beschreibung aufgeführte Nicht-Patentliteratur**

- **JIAJU et al.** Review of Quanta Image Sensors for Ultralow-Light Imaging. *IEEE Transactions on Electron Devices,* 2022, vol. 69.6, 2824-2839
- **GYONGY, ISTVAN et al.** Object tracking and reconstruction with a quanta image sensor. *Proc. IISW,* 2017, 242-245
- **IWABUCHI, KIYOTAKA ; TOMOHIRO YAMAZAKI ; TAKAYUKI HAMAMOTO.** Iterative image reconstruction for quanta image sensor by using variance-based motion estimation. *reconstruction,* 2019, vol. 5, 6